# EUROPEAN PATENT APPLICATION

(11) **EP 3 223 344 A1**
(43) Date of publication of application: **27.09.2017**
(21) Application number: 15861946.0
(22) Date of filing: 26.06.2015
(51) Int. Cl.: H01M 4/48, H01M 4/583, H01M 10/38, B82Y 30/00, B82Y 40/00

(54) **CATHODE MATERIAL PREPARATION METHOD, CATHODE MATERIAL AND LITHIUM-ION BATTERY**

(30) Priority: 21.11.2014 RU 2014146696
(71) Applicant: Obshhestvo S Ogranichennoj Otvetstvennost'ju "Lition", g. Dubna, Moskovskaya obl. 141981 (RU)
(72) Inventor: SEMENENKO, Dmitrij Aleksandrovich, Moscow 119991 (RU); BELOVA, Alina Igorevna, Moscow 119991 (RU); ITKIS, Daniil Mihajlovich, Moscow 119991 (RU); KRIVCHENKO, Viktor Aleksandrovich, Odincovskij rajon Moskovskaya oblast 143080 (RU)
(74) Representative: Chimini, Francesco
(86) International application number: PCT/RU2015/000400
(87) International publication number: WO 2016/080862

(57) **Abstract**

The present invention is related to the method for producing the cathode material, cathode material and lithium-ion battery. The present invention provides the higher capacity and number of recharge cycles. The lithium battery comprises the metallic lithium anode, electrolyte and a cathode comprising metallic current collector coated with a suspension (concentration 0.1-1 g/mL) of composite material comprising V₂O₅ nanorods in graphene shell, dissolved in acetone.

## Description

### Field of the invention

The present invention relates to a method for producing a cathode material, cathode material and lithium-ion battery.

### Description of the prior art

The known example of the electrode material for lithium battery positive electrodes is MₓV₂O₅, where M=H⁺, Li⁺, x=0.05±0.05 for H⁺ and 0.8±0.01 for Li⁺ (RU 2009/138900 A, pub. 27.04.2011). However, this kind of material provides low specific capacity for the lithium battery.

The closest analogue of the present invention is the cathode material for Li-ion battery disclosed in US 2012/0321953, pub. 20.12.2012. Therein the composite material based on vanadia nanoparticles and graphene is used as a cathode material. The composite is produced by making a suspension of vanadia nanoparticles and graphene in volatile organic solvent, and subsequent evaporation of the solvent, that gives the resulting composite material. However, this method cannot provide effective contact between the graphene layers and vanadia nanoparticles, thus the battery capacity is lower than expected (below 400 mAh/g), and the capacity loss is 90% after 100 recharge cycles. Moreover, the loss of contact between the vanadia particles and graphene occurs during cycling, that causes sufficient decrease of the battery capacity during battery recharge.

### Summary of the invention

The object of the present invention is to develop a cathode material for the secondary batteries that can increase the specific capacity during battery recharge.

The technical advantage of the present invention is the increase of the battery specific capacity and number of recharge cycles.

These advantages can be achieved by the following method for producing the composite material:
- synthesis of V₂O₅ hydrogel or xerogel;
- heating a mixture of vanadia hydrogel (or xerogel) and carbon material in sealed Teflon autoclave at 130-200°C and pressure 100-600 MPa for 24 hours, to obtain composite material comprising vanadia nanorods in graphene shell;
- centrifuging of the resulting composite material;
- washing the composite material;
- drying the composite material at 50°C.

The mixture comprises the following components with the content, mass. %:
Vanadia hydrogel or xerogel - 60-95;
Carbon material - 5-40.

Hydrogel or xerogel is obtained by the hydrolysis of organic derivatives of vanadic acid, or by polycondensation of vanadates in aqueous solution in acidic media, or by decomposition of peroxovanadate compounds formed after dissolution of crystalline vanadia in hydrogen peroxide solution.

Carbon material was preliminary treated with hydrogen peroxide solution in acidic media.

Carbon material can be chosen from the group: graphite oxide, reduced graphite oxide, acetylene black, activated carbon.

The advantages of the present invention can be achieved by utilizing the composite material comprising vanadia nanoparticles core in graphene shell.

Moreover, the advantages can be achieved by utilizing Li battery with metallic Li anode, electrolyte and the cathode comprising metallic current collector, which can be coated with the suspension (concentration 0.1-1 g/mL) of composite material dissolved in acetone.

Current collector is made of foil or mesh.

The coating of the current collector can additionally contain hydrophobic polymer binder with content of 0-20 mass.%.

Hydrophobic polymer binder can be chosen from the group: poly(vinyliden fluoride), poly(tetrafluorethylene).

Electrolyte contains salt that is dissolved in the solvent and can be chosen from the group: lithium perchlorate, lithium hexafluorophosphate, lithium tetrafluoroborate.

The solvent can be chosen from the group: propylene carbonate, ethylene carbonate, butylene carbonate, dimethyl carbonate, ethyl methyl carbonate, diethyl carbonate, 1,2-dimethoxyethane, 1,3-dioxolane, tetrahydrofuran, diethylene glycol dimethyl ether, triethylene glycol dimethyl ether, diethylene glycol dibutyl ether, dimethylsulfoxide, 1-ethyl-3-methylimidazolium hexafluorophosphate, 1-ethyl-3-methylimidazolium tetrafluoroborate, 1-ethyl-3-methylimidazolium bis-triflouromethylsulfonilimide, 1-butyl-3-methylimidazolium hexafluorophosphate, 1-butyl-3-methylimidazolium bis-triflouromethylsulfonilimide, 1-methyl-1-propylpiperidin hexafluorophosphate, 1-methyl-1-propylpiperidin bis-triflouromethylsulfonilimide and mixture thereof.

### Brief description of the drawings

Fig. 1 - Galvanostatic discharge curve of the lithium battery comprising the cathode material from the closest analogue in the prior art.
Fig. 2 - Galvanostatic discharge curve of lithium battery comprising the cathode material composed of V₂O₅ nanorods in graphene shell.
Fig. 3 - Galvanostatic discharge curve of lithium battery comprising the cathode material composed of V₂O₅ nanorods in graphene shell, at current 0.1C after 30 recharge cycles. Black curve represents the 1^{st} discharge cycle, grey curve - 30^{th} discharge cycle.
Fig. 4 - Galvanostatic charge curve of lithium battery comprising the cathode material composed of V₂O₅ nanorods in graphene shell, at current 0.1C after 30 recharge cycles. Black curve represents the 1^{st} charge cycle, grey curve - 30^{th} charge cycle.

### Description of the preferred embodiments

The method for producing the composite cathode material contains the following steps:
- producing V₂O₅ hydrogel or xerogel;
- heating a mixture of vanadia hydrogel (or xerogel) and carbon material in sealed Teflon autoclave at 130-200°C and pressure 100-600 MPa for 24 hours, to obtain composite material comprising vanadia nanorods in graphene shell;
- centrifuging of the resulting composite material;
- washing the composite material;
- drying the composite material at 50°C.

The mixture comprises the following components with the content, mass. %:
Vanadia hydrogel or xerogel - 60-95;
Carbon material - 5-40.

The carbon material content less than 5 mass.% causes low electrical conductivity of the cathode material, thus decreasing characteristics of the battery. The carbon content more than 40 mass.% lowers the specific capacity of the cathode material due to the high amount of inactive carbon material in the composite cathode.

Hydrogel or xerogel can be obtained by the hydrolysis of organic derivatives of vanadic acid or by polycondensation of vanadates in aqueous solution in acidic media, or by decomposition of peroxovanadate compounds formed after dissolution of crystalline V₂O₅ in hydrogen peroxide solution.

Carbon material is preliminary treated with hydrogen peroxide solution in acidic media.

Treatment of carbon material with hydrogen peroxide solution provides better adhesion of carbon material to the V₂O₅ surface.

Carbon material can be chosen from the group: graphite oxide, reduced graphite oxide, acetylene black, activated carbon.

Composite material comprises the V₂O₅ core and graphene shell.

Lithium battery contains the housing with the space to place the cathode and the metallic Li anode, that are separated from each other by the liquid electrolyte that is filled into the battery housing, and the cathode comprises metallic current collector coated with the suspension (concentration 0.1-1 g/mL) of composite material dissolved in acetone.

If concentration of the suspension is less than 0.1 g/mL, the viscosity of the suspension is low, and if the concentration is more than 1 g/mL, the viscosity is too high, that does not allow to coat and fix the composite material on the current collector uniformly.

Current collector is made of foil or mesh.

The suspension for coating the current collector can additionaly contain hydrophobic polymer binder with content of 0-20 mass.%. The content of the hydrophobic binder more than 20 mass.% leads to the decrease in electrical conductivity of the cathode material.

Hydrophobic polymer binder can be chosen from the group: poly(vinyliden fluoride), poly(tetrafluorethylene).

Electrolyte contains salt that is dissolved in the solvent and can be chosen from the group: lithium perchlorate, lithium hexafluorophosphate, lithium tetrafluoroborate.

The solvent can be chosen from the group: propylene carbonate, ethylene carbonate, butylene carbonate, dimethyl carbonate, ethyl methyl carbonate, diethyl carbonate, 1,2-dimethoxyethane, 1,3-dioxolane, tetrahydrofuran, diethylene glycol dimethyl ether, triethylene glycol dimethyl ether, diethylene glycol dibutyl ether, dimethylsulfoxide, 1-ethyl-3-methylimidazolium hexafluorophosphate, 1-ethyl-3-methylimidazolium tetrafluoroborate, 1-ethyl-3-methylimidazolium bis-triflouromethylsulfonilimide, 1-butyl-3-methylimidazolium hexafluorophosphate, 1-butyl-3-methylimidazolium bis-triflouromethylsulfonilimide, 1-methyl-1-propylpiperidin hexafluorophosphate, 1-methyl-1-propylpiperidin bis-triflouromethylsulfonilimide and mixture thereof.

### Example 1

V₂O₅ hydrogel is obtained by the hydrolysis of organic derivatives of vanadic acid. Then hydrogel in content of 60 mass.% is mixed with carbon material in content of 40 mass.%, chosen from the group: graphite oxide, reduced graphite oxide, acetylene black, activated carbon. The mixture of hydrogel and carbon material is placed in sealed Teflon autoclave at 200°C and pressure 100 MPa for 24 hours, to obtain composite material containing V₂O₅ nanorods in graphene shell. After that the composite material is centrifuged to separate it from the solution. Then composite material is washed in distilled water to remove the impurities, e.g. hydrogen ions and vanadate-ions, and dried at 50°C.

### Example 2

V₂O₅ hydrogel is obtained by the polycondensation of vanadates in aqueous solution in acidic media. Then V₂O₅ hydrogel in content of 95 mass.% is mixed with carbon material in content 5 mass.% chosen from the group: graphite oxide, reduced graphite oxide, acetylene black, activated carbon. The mixture of hydrogel and carbon material is placed in sealed Teflon autoclave at 130°C and pressure 600 MPa for 24 hours, to obtain composite material cotaining V₂O₅ nanorods in graphene shell. After that the composite material is centrifuged to separate it from the solution. Then the composite material is washed in distilled water to remove the impurities, e.g. hydrogen ions and vanadate-ions, and dried at 50°C.

### Example 3

The battery comprising metallic lithium anode, cathode comprising metallic current collector coated with the suspension (concentration 0.5 g/mL) of composite material containing V₂O₅ nanorods in graphene shell, dissolved in acetone, and electrolyte containing 1 M LiClO₄ in a mixture of propylene carbonate and dimethoxyethane in a volume ratio of 7:3, operates as follows. At the battery discharge lithium anode is dissolved in electrolyte forming Li⁺ ions. As the electrolyte solution contains LiClO₄ salt, Li⁺ ions from the electrolyte are intercalated into the cathode material structure forming Li-containing phases. At battery charge Li⁺ ions are deintercalated from the cathode material structure into electrolyte and uniformly deposited as a metal on the anode surface.

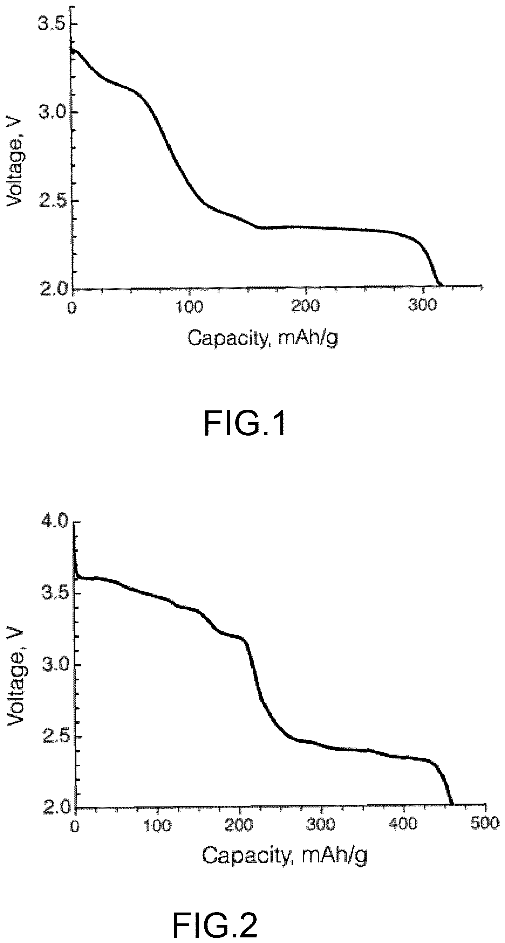

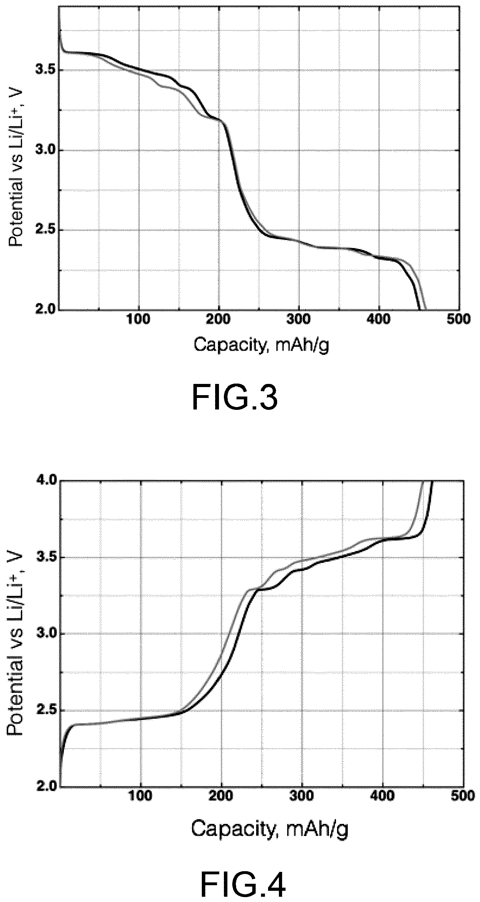

Experiments showed that, in contrast to the battery described in the closest analogue, for the battery of the present invention comprising the cathode that contains metallic current collector coated with the suspension (concentration 0.1-1 g/mL) of composite material, that was obtained according to the present invention and contains V₂O₅ nanorods in graphene shell, the specific capacity increases for 150 mAh/g (Fig. 1,2) and capacity fade after 30 cycles is not higher than 3% (Fig. 3,4).

Thus, the battery from the present invention provides higher capacity and higher number of recharge cycles.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A method for producing composite cathode material comprising the following steps:
- synthesis of V₂O₅ hydrogel or xerogel;
- heating a mixture of vanadia hydrogel (or xerogel) and carbon material in sealed Teflon autoclave at 130-200°C and pressure 100-600 MPa for 24 hours, to obtain composite material comprising vanadia nanorods in graphene shell;
- centrifuging of the resulting composite material;
- washing the composite material;
- drying the composite material at 50°C.

2. The method for producing composite cathode material in accordance with claim 1, wherein the mixture contains components in the following content, mass.%:
Vanadia hydrogel or xerogel - 60-95;
Carbon material - 5-40.

3. The method in accordance with claim 1, wherein the hydrogel or xerogel is obtained as a result of hydrolysis of organic derivatives of vanadic acid or by polycondensation of vanadates in aqueous solution in acidic media, or by decomposition of peroxovanadate compounds formed after dissolution of crystalline V₂O₅ in hydrogen peroxide solution.

4. The method in accordance with claim 1, wherein the carbon material is preliminary treated with the hydrogen peroxide solution in acidic media.

5. The method in accordance with claim 4, wherein the carbon material is chosen from the group: graphite oxide, reduced graphite oxide, acetylene black, activated carbon.

6. A composite cathode material obtained by the method of claim 1-5, comprising core composed of V₂O₅ nanorods and graphene shell.

7. A lithium battery comprising metallic Li anode, electrolyte and metallic current collector as a cathode, the collector coated with a suspension (concentration 0.1-1 g/mL) of the composite material according to claim 6 dissolved in acetone.

8. The battery according to claim 4, wherein the current collector is plate or mesh.

9. The battery according to claim 5, wherein the coating suspension of the current collector additionally contain hydrophobic polymer binder with content of 0-20 mass.%.

10. The battery according to claim 6 wherein the hydrophobic polymer binder is chosen from the group: polyvinyliden difluoride), tetrafluorethylene.

11. The battery according to claim 4, wherein the electrolyte contains salt dissolved in the solvent, where salt is chosen from the group: lithium perchlorate, lithium hexafluoruphosphate, lithium tetrafluoroborate.

12. The battery according to claim 8, wherein the solvent is chosen from the group: propylene carbonate, ethylene carbonate, butylene carbonate, dimethyl carbonate, ethyl methyl carbonate, diethyl carbonate, 1,2-dimethoxyethane, 1,3-dioxolane, tetrahydrofuran, diethylene glycol dimethyl ether, triethylene glycol dimethyl ether, diethylene glycol dibutyl ether, dimethylsulfoxide, 1-ethyl-3-methylimidazolium hexafluorophosphate, 1-ethyl-3-methylimidazolium tetrafluoroborate, 1-ethyl-3-methylimidazolium bis-triflouromethylsulfonilimide, 1-butyl-3-methylimidazolium hexafluorophosphate, 1-butyl-3-methylimidazolium bis-triflouromethylsulfonilimide, 1-methyl-1-propylpiperidin hexafluorophosphate, 1-methyl-1-propylpiperidin bis-triflouromethylsulfonilimide and mixture thereof.
